# FASCICULE DE BREVET EUROPEEN

(11) **EP 3 436 414 B1**
(45) Date de publication et mention de la délivrance du brevet: **28.10.2020**
(21) Numéro de dépôt: 17710969.1
(22) Date de dépôt: 17.03.2017
(51) Int. Cl.: C03C 17/34, B32B 17/06, B32B 17/10

(54) **VITRAGE ANTI-FEU**
BRANDSCHUTZVERGLASUNG
FIREPROOF GLAZING

(30) Priorité: 29.03.2016 EP 16162657
(43) Date de publication de la demande: 06.02.2019
(73) Titulaire: AGC Glass Europe, 1348 Louvain-la-Neuve (BE)
(72) Inventeur: LECOLLEY, François, 7100 Saint-Vaast (BE)
(74) Mandataire: Le Vaguerèse, Sylvain Jacques
(86) Numéro de dépôt international: PCT/EP2017/056396
(87) Numéro de publication internationale: WO 2017/167588

(56) Documents cités:
- WO-A1-2011/120909

## Description

L'invention concerne des vitrages résistant au feu comprenant un matériau intumescent à base de silicates alcalins hydratés entre des feuilles de verre. Plus précisément l'invention concerne les vitrages dans lesquels le matériau intumescent est obtenu par séchage d'une solution de ces silicates appliquée en nappe sur un support, notamment sur une feuille de verre entrant dans la composition du vitrage.

La production des couches de matériaux intumescents par séchage d'une nappe de solution de silicate constitue le moyen le plus répandu de production utilisé pour la production de vitrages anti-feu. Ce mode de production offre des produits dont les propriétés répondent au mieux aux exigences dans ce domaine, notamment dans leurs performances à l'épreuve du feu, mais aussi dans leur qualité optique et la stabilité de celle-ci dans le temps. Enfin ces produits répondent aussi aux exigences mécaniques assurant la sécurité de leur emploi.

Les vitrages obtenus de cette façon soulèvent néanmoins des difficultés bien connues. Le séchage de nappes de solution impose des contraintes multiples. L'opération de séchage est conduite par lots dans des enceintes dont l'atmosphère est contrôlée en température et hygrométrie. Le séchage est une opération qui doit s'effectuer très progressivement pour éviter la formation de divers défauts possibles tels que les bulles, les inégalités de surface ou les craquelures ...Ce séchage est donc long, et est d'autant plus long que le temps de séchage est beaucoup plus que proportionnel à l'épaisseur de la nappe de solution initiale.

En raison probablement des mécanismes mis en jeu dans cette opération de séchage, la vitesse de déshydratation va décroissant dans le temps. La raison supposée est que le séchage qui s'effectue par échange à l'interface de la nappe avec l'atmosphère de l'enceinte, appauvrit en eau la partie la plus proche de cette interface. Le rééquilibrage de la teneur en eau dans l'épaisseur de la nappe est conditionné par le gradient de cette teneur qui s'établit du fait même de la progression du séchage, mais le rééquilibrage dans l'épaisseur est d'autant plus lent que le matériau devient plus visqueux et finalement plus « solide ».

Le choix de solutions initiales dont la teneur en eau est la moins élevée possible qui constituerait une façon de limiter l'ampleur du séchage, et par suite la durée de celui-ci, ne résout pas la question. Les propriétés de résistance au feu des matériaux intumescents conduisent à préférer des produits à forte caractéristiques réfractaires, même si les caractéristiques mécaniques en sont aussi modifiées. Ces produits sont ceux dont le rapport molaire SiO₂/M₂O, M étant un alcalin, est relativement élevé par exemple de l'ordre de 3 à 7. Plus le rapport molaire est élevé, moins le silicate est soluble dans l'eau. Autrement dit pour des rapports molaires élevés il est nécessaire de partir de solutions de silicates à forte teneur en eau, ce qui conduit à l'allongement du séchage, alors que le but est de le raccourcir.

Pour les raisons indiquées ci-dessus la pratique est de procéder au séchage de nappes de solutions dont l'épaisseur est limitée pour réduire le temps nécessaire à l'obtention du produit final. Cette façon de faire n'est pas sans conséquence. Les propriétés anti-feu dépendent aussi de l'épaisseur du matériau intumescent mis en œuvre. Ce matériau soumis au feu forme une mousse qui est d'autant plus isolante qu'elle est plus épaisse. Aussi lorsque l'épaisseur du matériau séché se limite à 1 ou 2mm, pour obtenir des vitrages dont le temps d'isolation et d'étanchéité est très long, par exemple 120 minutes, il est nécessaire de multiplier les couches de ces matériaux et aussi les feuilles de verre qui les portent. Les vitrages deviennent alors extrêmement pesants et volumineux.

Par ailleurs les tentatives pour obtenir des matériaux séchés d'épaisseurs relativement importantes, par exemple supérieures à 3 ou 4mm, en dehors de la question de la durée du séchage et de possibles effets de fluage, conduisent aussi à des difficultés de qualité. Sans avoir complètement élucidé la raison de certaines de ces difficultés, les inventeurs forment l'hypothèse selon laquelle l'inégalité des performances serait due à des matériaux ne présentant pas une bonne homogénéité dans leur épaisseur. En particulier les produits épais auraient la particularité d'offrir un gradient de leur teneur en eau, les couches superficielles au contact du flux d'air de séchage présentant la teneur en eau la plus faible, teneur qui s'accroîtrait en s'éloignant de la surface.

Un but de la présente invention est de parvenir à des vitrages comportant des matériaux intumescents à base de silicates alcalins, matériaux obtenus par séchage de solutions selon le mode dans lequel ces solutions sont appliquées en nappes lesquelles sont soumises au séchage, aboutissant à des matériaux plus homogènes notamment dans la teneur en eau dans leur épaisseur.

Un autre but de l'invention est de parvenir à ce que les vitrages en question, offrent des qualités optiques résistant mieux au vieillissement.

Un autre but de l'invention est encore d'améliorer le comportement au feu des matériaux intumescents de ces vitrages par rapport aux matériaux analogues antérieurs.

Un but encore de l'invention est de produire ces matériaux intumescents dans des temps de séchage moindres.

Pour atteindre ces buts les inventeurs proposent de procéder à la formation des matériaux intumescents par une succession de séchages effectués sur la composition appliquée sous forme de nappes superposées, chacune correspondant à une fraction de l'ensemble du matériau entrant dans la composition de la couche intumescente finale. Chaque séchage de cette succession correspond à une couche dont l'épaisseur est une partie seulement de l'épaisseur totale. Selon l'invention les séchages successifs sont effectués après que le séchage précédent ait aboutit à la teneur en eau sensiblement égale à celle recherchée pour le matériau final, et en choisissant les compositions des nappes successives de sorte à limiter le transfert de l'eau d'une couche à la suivante pendant l'opération.

La mise en œuvre du séchage selon l'invention, est analogue à celle des techniques antérieures de séchage. De façon succincte, la solution de silicate préparée est appliquée en une première nappe sur un support horizontal tel qu'une feuille de verre. Dans la façon la plus usuelle cette nappe et son support sont placés dans une enceinte parcourue par un courant gazeux à température et hygrométrie contrôlées. Le séchage est poursuivi selon un cycle thermique comprenant montée en température, palier, puis redescente de la température, jusqu'à l'obtention de la teneur en eau souhaitée qui est sensiblement celle qui doit être celle du produit intumescent final.

Sur cette première couche séchée, une deuxième solution de silicate est appliquée et séchée, et le processus est reproduit autant de fois que nécessaire pour l'obtention de l'épaisseur finale souhaitée.

Une alternative à ce séchage en atmosphère contrôlée consiste à soumettre la couche à une exposition à un rayonnement infrarouge. De même à ces opérations faites par lots il est possible de substituer une technique de séchage effectuée de façon continue.

Dans la publication WO 2011/120909, la demanderesse présente des vitrages comportant en association deux couches de matériaux intumescents de nature différentes en particulier avec des rapports molaires différents. Cette publication pour la production de ces couches de matériaux, propose la production séparée de ces couches jusqu'à la condition qui est la leur dans le produit final. Autrement dit chaque couche est séchée, et les deux couches sont ensuite assemblées, aucun séchage ou modification de la composition n'intervenant postérieurement à cet assemblage.

La publication citée indique aussi que la superposition de nappes de composition de silicate, avec séchages successifs de ces différentes applications ne conduit pas à un gain de temps total de séchage. Cette constatation doit être précisée. Dans cette publication les différentes applications sont faites avec la même composition. Il semble en effet dans ce cas que la composition liquide qui est appliquée sur une couche précédemment séchée de même composition, conduit à un rééquilibrage entre la composition liquide d'une part et celle préalablement séchée d'autre part. Le fait que les compositions de départ soient les mêmes semble faciliter ces transferts de l'eau de la composition liquide vers la partie séchée. Ce transfert est d'autant plus facile que les couches en question sont peu épaisses et qu'un certain équilibre est plus facilement atteint. Le temps de contact entre la couche préalablement séchée et la nappe de solution appliquée sur celle-ci, avant que la seconde couche soit également séchée, est par ailleurs suffisamment long pour favoriser les équilibrages qui se font par transfert d'eau de l'une à l'autre. Ce mécanisme est par ailleurs facilité lorsque l'on opère avec des compositions à faible rapport molaire, les solutions dans ce cas ayant une faible viscosité.

Quoiqu'il en soit si la superposition de couches identiques ne permet pas, ou presque pas, de gain de temps sur le séchage global, cette constatation ne vaut que pour des compositions identiques. Les inventeurs ont montré que les phénomènes de transferts indiqués ci-dessus pouvaient être sensiblement moindres, voire quasi inexistants lorsque l'on choisit de superposer à une nappe de composition traditionnelle, une nappe qui fait obstacle à la diffusion de l'eau contenue dans ces compositions.

Pour conserver autant que possible les propriétés générales des couches intumescentes connues, les couches faisant obstacle à la diffusion de l'eau sont également des couches de silicates alcalins, mais la composition de celles-ci, ou au moins d'une sur deux, est sélectionnée pour favoriser le caractère de moindre perméabilité à la diffusion de l'eau d'une nappe à la suivante.

Le choix des compositions utilisées en pratique pour constituer les matériaux intumescents des vitrages résistant au feu, est commandé pour partie par le coût de ces matériaux. Les moins coûteux sont les solutions de silicates alcalins disponibles dans le commerce. Celles-ci sont fabriquées par fusion de carbonate de sodium et de sable à haute température, et les cristaux obtenus sont mis en solution dans l'eau. Ces solutions commerciales sont dites « naturelles » ou « commerciales » dans la suite par opposition aux solutions obtenues par attaque basique de silice colloïdale, dites synthétiques. Ces dernières, étant plus coûteuses on s'efforce autant que possible d'utiliser les solutions commerciales, mais comme indiqué ci-dessous, cette utilisation comporte certaines contraintes.

Les propriétés des solutions de silicates dépendent de différents paramètres : concentration, rapport molaire Si/alcalin (Rm), et de la nature de l'alcalin. Tous ces paramètres influencent la viscosité et surtout la stabilité dans le temps. Si la solution est très concentrée et/ou le rapport molaire élevé, la tendance naturelle de ces silicates est de former un gel. Ce mécanisme qui est utilisé dans la formation des couches par séchage doit être particulièrement maîtrisé. Ce sont ces propriétés aussi qui commandent la composition des solutions commercialisées lesquelles, pour rester stables, sont notamment limitées en concentration en matière sèche.

Les propriétés du gel dépendent elles aussi de ces paramètres. Un Rm élevé produit des chaînes de polymère longues et donc un gel dur favorable au caractère réfractaire, mais aussi comme les inventeurs l'ont mis en évidence, à une tendance à limiter la diffusion de l'eau entre les couches.

Il est possible comme constituants des couches formant obstacle à la diffusion de l'eau d'utiliser des silicates naturels avec des Rm plus élevés que ceux usuellement utilisés, et donc correspondant à des polymères plus longs. Ces silicates à rapports molaires élevés (comparés à ceux utilisés de façon traditionnelle) ont pour inconvénient, dans les produits commerciaux, d'avoir une teneur en eau également plus élevée, pour la raison exposée précédemment qui est de maintenir leur stabilité dans le temps. Partant de solutions à plus forte teneur en eau le séchage est nécessairement allongé.

Globalement le temps de séchage selon l'invention n'est pas nécessairement plus court. Néanmoins les modalités de production proposées selon l'invention conduisent aussi à d'autres avantages. C'est le cas en particulier de l'amélioration de la résistance au vieillissement, ou encore des qualités de résistance au feu, comme précisé à propos des exemples d'essais figurant plus loin.

Selon l'invention il est avantageux de choisir comme couche faisant obstacle à la diffusion de l'eau, une couche constituée, au moins en partie, à partir de silicate synthétique, ou à partir d'une solution de silicate commerciale modifiée par l'ajout de silice colloïdale pour accroître le rapport molaire. Comme indiqué plus haut ces silicates synthétiques sont constitués au moins en partie, par action d'un hydroxyde alcalin sur de la silice colloïdale. Ces couches combinent l'ensemble des avantages énoncés y compris celui de permettre une réduction du temps global de séchage en raison de leur mode de préparation. Celles-ci sont en effet préparées juste avant leur utilisation, et pour un Rm relativement élevé, la teneur en eau peut être moindre que celles des solutions commerciales correspondantes dans la mesure où la question de leur stabilité dans le temps se limite à des périodes relativement courtes.

Si comme précisé ci-dessus la deuxième solution de silicate appliquée peut être de même nature ou de nature différente de la première (naturelle, naturelle modifiée ou synthétique), la quantité appliquée également peut être équivalente ou différente et la durée du séchage peut varier par rapport à la première opération. La fin de chaque opération partielle de séchage est de préférence telle que la teneur en eau soit approximativement la même pour chaque couche partielle.

Si le mode de séchage reste pratiquement celui des modes traditionnels, le fait de limiter l'épaisseur de chaque couche partielle permet notamment de limiter le gradient de teneur en eau dans l'épaisseur à chaque opération, et pour le produit final de présenter globalement une meilleure homogénéité de teneur en eau dans son épaisseur.

Dans les matériaux séchés selon l'invention les variations de teneur en eau dans l'épaisseur ne sont pas supérieures en valeurs absolues à 2% et de façon préférée pas supérieures à 1%. Chaque couche partielle présente son propre gradient mais d'autant plus limité que l'épaisseur est aussi plus faible. Ces gradients partiels ont en commun de se développer dans le même sens d'une teneur en eau plus importante à la base de la couche, tandis que la partie de celle-ci au contact de l'atmosphère dans l'opération de séchage présente systématiquement une teneur en eau plus faible.

Par suite des rééquilibrages qui se produisent inévitablement au contact de la couche séchée et de la composition liquide qui lui est superposée, les différences de teneurs en eau des deux côtés des interfaces sont néanmoins un peu atténuées.

En réduisant l'ampleur des gradients de teneur en eau on constate une amélioration sensible de la résistance au vieillissement. En pratique une constatation antérieure des inventeurs montrait que l'apparition d'un voile (haze) dans le vitrage à l'épreuve du temps, était d'autant plus sensible que le matériau intumescent présentait une teneur en eau plus élevée toute autre caractéristique restant inchangée. Dans ces conditions des gradients importants se traduisent nécessairement par une zone à plus forte teneur pour une teneur moyenne donnée. Comme indiqué plus haut, le séchage en une seule opération sur la totalité de la solution constituant une couche épaisse favorise la formation de ces gradients importants. En pratique dans ces conditions la teneur en eau présente un maximum du côté opposé à celui exposé à l'atmosphère de séchage, et ce maximum est d'autant plus important que l'épaisseur est également importante.

La mise en œuvre de l'invention limitant les gradients de concentration en eau permet de réduire aussi les risques d'apparition de défauts liés à des concentrations élevées.

Parmi les facteurs qui permettent de réduire les transferts d'eau ou cette miscibilité entre les nappes successives soumises au séchage, les inventeurs ont identifié notamment les différences de rapports molaires. La séparation des couches est d'autant mieux obtenue que les rapports molaires présentent un écart plus important d'une couche à la suivante. Selon l'invention pour améliorer la non miscibilité au cours du séchage, un écart ΔRm d'au moins 0,5 est nécessaire et de préférence cet écart est d'au moins 0,8.

Les rapports molaires des compositions de silicates se situent de 3,2 à 5,5.

Le rapport molaire n'est pas le seul élément qui permette de favoriser cette immiscibilité. La manière dont la composition est préparée intervient également et éventuellement peut se combiner avec cette différence de rapport molaire.

Comme indiqué précédemment deux modes principaux de préparation conduisent de façon connue à la formation des compositions liquides de silicates alcalins, le mode conduisant aux solutions commerciales et celles dont la préparation comporte l'utilisation de silice colloïdale. La silice en question est soit ajoutée à une solution de silicate industrielle pour en augmenter le rapport molaire, soit est mise en réaction avec un hydroxyde alcalin, soit encore par une combinaison de ces deux modes d'introduction de silice colloïdale.

L'expérience montre que pour une même composition élémentaire - même teneur en silice et en alcalin, même teneur en matière sèche - les matériaux obtenus présentent des différences de comportement et ces différences peuvent évoluer dans le temps suivant la préparation des compositions synthétiques par suite d'une sorte de «maturation». La raison de ces différences n'est pas parfaitement établie. Il semble que ces matériaux se distinguent par leur structure. Ces structures comportent des agrégats complexes. Dans les compositions formées en partie au moins avec de la silice colloïdale ces agrégats seraient de plus petites dimensions que dans ceux provenant de silicates commerciaux. L'introduction de ces particules de silice pourrait favoriser une sorte de nucléation en nombre accru mais par suite conduisant à des agrégats de plus petites dimensions.

L'origine des compositions soumises au séchage constitue un moyen pour minimiser la miscibilité des nappes. Il est donc possible selon l'invention, pour des séchages successifs d'alterner l'utilisation des nappes de silicates industriels et de silicates obtenus en utilisant une composition dans laquelle une partie au moins de la silice présente provient de silice colloïdale. Pour faire en sorte que la différence de comportement soit sensible, la composition de ces derniers comprend avantageusement au moins 10%, et de préférence 15% de silice provenant de silice colloïdale. La proportion de silice colloïdale utilisée est aussi un moyen de régler le rapport molaire souhaité.

Les compositions de silicates alcalins différents, et particulièrement de sodium et de potassium, produisent également des couches qui au séchage sont peu miscibles. Il est également possible d'utiliser des silicates «mixtes» de sodium et de potassium pour ajuster au mieux les propriétés, y compris rhéologiques des compositions et des couches auxquelles ces compositions conduisent.

Le séchage de plusieurs compositions appliquées successivement, que ce soit dans le but de minimiser les variations de teneur en eau, et/ou pour réduire le temps de séchage, est particulièrement avantageux pour des produits intumescents présentant une certaine épaisseur.

Avantageusement l'épaisseur totale du produit intumescent final est d'au moins 1,5mm et de préférence d'au moins 2mm.

Le nombre des couches partielles, provenant des séchages successifs, dans le produit final n'est pas limité techniquement. Néanmoins, pour des raisons manifestes, la multiplication des couches, pour une épaisseur finale déterminée, conduit à un coût de production accru. Il est donc préférable de limiter ce nombre en tenant compte de l'épaisseur totale du produit.

Pour des épaisseurs totales qui ne dépassent pas 3mm, le nombre de couches est avantageusement d'au plus 5. Ce nombre peut être accru avantageusement pour les épaisseurs totales plus importantes. Ainsi 5 ou 7 couches peuvent être envisagées pour des épaisseurs de plus de 4mm. Encore une fois ce nombre n'est limité que par des considérations pratiques et économiques.

Individuellement chaque couche partielle est avantageusement d'au moins 0,25mm d'épaisseur à l'état séché. Pour valoriser les avantages liés aux produits obtenus selon l'invention, il est préférable de limiter l'épaisseur de chacune des couches partielles séchées. Cette épaisseur est de préférence de moins de 2mm et de façon préférée de moins de 1,5mm, et de façon particulièrement préféré de moins de 1mm.

La mise en œuvre de l'invention, comme indiqué précédemment, est particulièrement avantageuse lorsque les produits séchés doivent présenter une teneur globale en eau relativement restreinte. De façon préférée, cette teneur globale en eau n'est pas supérieure à 33% et de façon particulièrement préférée pas supérieure à 28% en poids.

Le bénéfice des matériaux séchés selon l'invention ne doit pas être obtenu au détriment des propriétés de résistance au feu. Pour cette raison la teneur globale en eau est de préférence maintenue à une valeur supérieure à 18% et de préférence supérieure à 21% en poids du matériau séché.

Outre les silicates alcalins hydratés indiqués ci-dessus les compositions séchées peuvent comporter divers additifs connus pour leur propriétés et décrits dans l'art antérieur, notamment dans EP 1 960 317, EP 1 855 878, EP 2 010 382.

Parmi ces additifs il convient de mentionner particulièrement ceux qui contribuent à l'établissement d'une certaine plasticité des matériaux intumescents, plasticité qui améliore notamment certaines propriétés mécaniques. Il s'agit notamment de la glycérine ou de l'éthylène glycol. Ces additifs peuvent en partie se substituer à la teneur en eau de la composition des silicates avant séchage. Ces polyols sont traditionnellement introduits à raison d'au moins 5% et de préférence d'au moins 6% en poids de la solution de silicate à sécher. Cette teneur est de préférence inférieure à 20% et de façon particulièrement préférée inférieure à 15%. Dans les couches de matériau séché cette proportion relative s'accroît du fait de l'élimination d'une partie de l'eau.

Globalement les compositions de silicates avant séchage selon l'invention présentent avantageusement une teneur en eau et polyols qui n'est pas inférieure à 42% en poids, et de préférence pas inférieure à 45%. Néanmoins les solutions initiales peuvent être ramenées à des teneurs en eau plus réduites par une étape préalable de déshydratation partielle ramenant par exemple la teneur en eau de la composition à une valeur de préférence inférieure à 40% et pouvant être aussi faible qu'environ 35%. Une déshydratation de ce type peut être conduite de la manière décrite dans la publication WO 2011/036 154.

D'autres additifs sont aussi traditionnellement utilisés en quantité limitée pour améliorer la tenue au feu. Ce sont par exemple des produits aminés tels que l'hydroxyde de tétra-méthyl-ammonium (TMAH).

Dans la suite l'invention est décrite de manière détaillée en faisant référence aux figures annexées dans lesquelles :
- la figure 1 est une représentation schématique en perspective d'un vitrage résistant au feu comprenant une couche intumescente ;
- la figure 2 est un diagramme illustrant l'incidence de l'épaisseur sur le temps de séchage d'une composition de silicate ;
- la figure 3 montre la différence de comportement à la diffusion d'eau de structures comportant trois couches identiques ou selon l'invention ;
- la figure 4 est un diagramme représentant l'évolution dans le temps d'un voile optique en fonction de la structure choisie ;
- les figures 5a et 5b montrent les teneurs respectives en silicate et en eau dans un ensemble de 5 couches superposées selon l'invention, déterminées à partir de spectres Raman
- la figure 6 montre l'évolution de la température de la face de la feuille de verre non exposée au cours d'essais au feu ;
- la figure 7 est une mesure de radiation sur le côté non exposé au feu au cours des mêmes essais ;
- la figure 8 est une vue schématique en perspective d'un vitrage résistant au feu comportant deux couches intumescentes et trois feuilles de verre
- la figure 9 est analogue à la figure 6, et présente le résultat d'essai au feu pour un vitrage comportant 3 feuilles de verre et deux couches intumescentes.

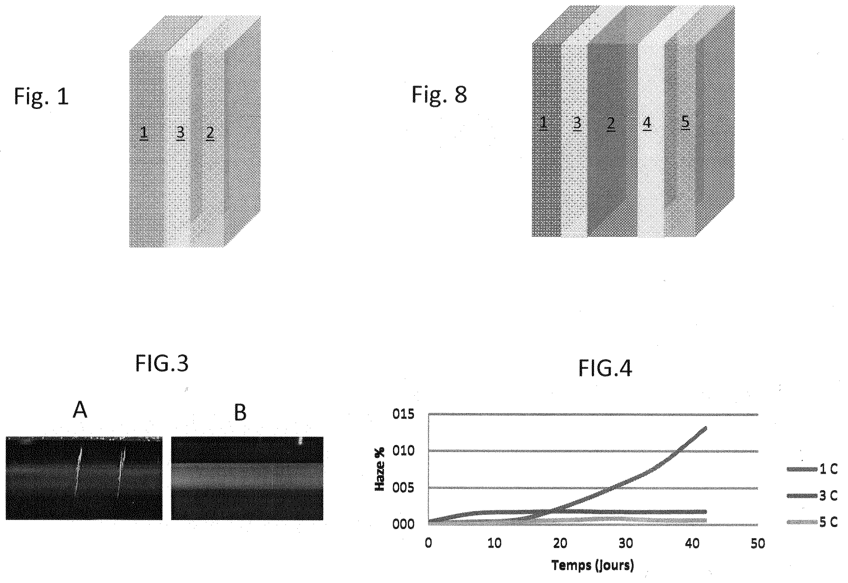

Le type de vitrage auquel se rapporte l'invention est illustré de façon schématique à la figure 1. Le vitrage comporte deux feuilles de verre 1, 2, réunies au moyen d'une couche de silicate alcalin hydraté 3. La couche 3 présente une transmission lumineuse élevée comparable à celle des feuilles de verre, et ne comporte pas de défauts, notamment des bulles ou un voile (haze) altérant la transmission lumineuse. En pratique un voile résiduel est toléré, mais celui-ci dans tous les cas doit rester inférieur à 3% (rapport de la transmission diffusée à la lumière incidente), de préférence inférieur à 2% et de façon particulièrement préférée inférieur à 1%.

La figure 1 présente la structure la plus simple comportant une seule couche intumescente entre deux feuilles de verre. Des structures plus complexes existent également, notamment comportant plusieurs couches intumescentes alternant avec des feuilles de verre, par exemple deux couches intumescentes avec trois feuilles de verre. Des vitrages sont connus également dans lesquels les feuilles de verre sont constituées d'ensembles feuilletés formés de deux feuilles de verre assemblées au moyen d'une feuille intercalaire d'un matériau thermoplastique tel que le poly-vinyl-butyral (PVB). Le remplacement d'une feuille de verre monolithique par un ensemble feuilleté est utilisé pour des raisons traditionnelles de comportement mécanique renforcé et de protection contre les rayons ultra-violets.

Dans tous les essais rapportés ci-dessous le protocole de préparation de la couche intumescente est celui décrit ci-après, étant entendu que d'autres modalités sont possibles, notamment un séchage par infra-rouges, mais aussi les techniques dans lesquelles le séchage est réalisé dans un appareillage permettant des opérations en continu. Pour ces dernières les compositions sont déposées à distance les unes des autres sur un support de type convoyeur qui progresse dans un four tunnel.

Les solutions de silicates alcalins, naturelles ou synthétiques, sont versées sur une feuille de verre en position horizontale. La solution est maintenue par un cordon imperméable à la solution disposé à la périphérie de la feuille. L'ensemble est placé dans une enceinte dans laquelle circule un courant d'air chaud et contrôlé en humidité. La teneur en eau de la couche est déterminée par pesée à l'issue du séchage.

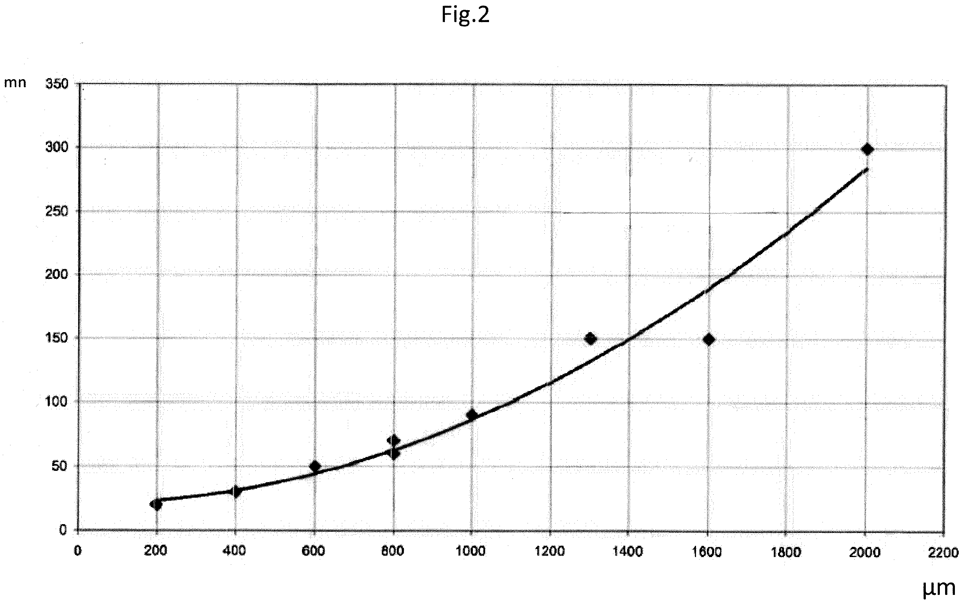

La figure 2 illustre le temps nécessaire de séchage partant d'une solution de référence à base de silicate commercial présentant un Rm de 3,46. La solution constituée après diverses additions présente une teneur en poids initiale de 65,1% d'eau, 7,1% de glycérine, 1,9% de TMAH. Le séchage est poursuivi dans tous les cas jusqu'à une teneur résiduelle en eau de 23% en poids.

La figure 2 montre l'importance de l'épaisseur sur la durée requise pour le séchage. Celle-ci croît sensiblement comme le carré de l'épaisseur de la nappe initiale. Cette constatation conduit à la nécessité de procéder au séchage sur des nappes relativement peu épaisses pour tenter de réduire le temps de séchage.

Comme indiqué dans des essais préliminaires, les inventeurs ont procédé à la constitution de la couche intumescente par superposition de couches partielles. Dans l'expérience illustrée à la figure 3, trois solutions de silicate sont successivement appliquées sur la feuille de verre pour la première, puis sur la couche précédemment séchée pour les suivantes. La quantité de solution mise au séchage présente une épaisseur à l'état liquide sensiblement identique pour chaque nappe.

Dans cet essai le temps de séchage de chaque couche partielle est d'environ 8 heures. Il ne s'agit pas de préparer la couche intumescente effective, mais de constater le comportement des couches dans ce mode particulier comportant plusieurs couches successives.

Pour distinguer les couches elles sont colorées par adjonction de deux colorants solubles dans l'eau, et qui sont sans incidence sur le processus de séchage. Ces colorants constituent un marqueur de la diffusion de l'eau entre les couches superposées.

La figure 3a correspond à la superposition de trois nappes de la même solution, celle indiquée à propos de la figure 2.

On constate dans ce cas que l'interface entre les différentes couches est floue. Le colorant de la deuxième couche a diffusé dans les deux couches contiguës montrant que l'eau d'une couche passe dans des proportions significatives dans les couches voisines. Ceci explique en partie au moins que le séchage par couches minces en plusieurs étapes ne permet pas de réduire de manière entièrement satisfaisante le temps global nécessaire pour la couche intumescente finale.

La figure 3b correspond à une coupe analogue à la précédente. Dans celle-ci, les couches inférieure et supérieure sont de composition identique à celle de la figure 3a.

La seconde couche est constituée à partir d'une solution synthétique préparée à partir d'une suspension de silice colloïdale à 50% en poids de silice et réaction avec une solution d'hydroxyde de potassium à 50% en poids de matière sèche. La solution comprend aussi 6% en poids de glycérine et 2% en poids de TMAH. Cette composition présente un Rm de 5,2 et une teneur en eau avant séchage de 48,4%.

Par l'utilisation de cette composition, on constate à l'expérience que les couches superposées sont cette fois nettement mieux délimitées. Autrement dit, les couches ne donnent pas lieu, entre elles, à des échanges en eau significatifs. En conséquence les opérations successives de séchage s'effectuent sans que la présence des couches préalablement séchées influence le déroulement ultérieur du séchage.

La mise en œuvre du séchage peut alors être sensiblement raccourcie pour une même teneur en eau et une même épaisseur finale. Ainsi pour une épaisseur finale de 1,5mm et une teneur en eau moyenne résiduelle de 24% une couche traditionnelle obtenue à partir de la composition naturelle indiquée plus haut, nécessite un séchage dans les conditions traditionnelles de 30 heures. La préparation en couches partielles multiples pour un ensemble comprenant cinq couches chacune d'à peu près 0,3mm, les trois couches naturelles et les deux couches synthétiques alternant comme précédemment, permet de réduire la durée totale de séchage à 12,5 heures. Bien entendu cette réduction du temps de séchage nécessite des opérations supplémentaires qui réduisent le gain résultant de ce mode de préparation. Mais ceci s'avère néanmoins globalement positif au plan industriel.

Le fait de réduire le temps de séchage n'est qu'un aspect de l'invention. Il convient aussi comme indiqué plus haut de vérifier que ce mode de préparation n'entraine pas d'altération des autres propriétés des vitrages, en particulier leurs propriétés optiques et la résistance au vieillissement de celles-ci.

Dans l'essai en rapport avec la figure 4, une couche intumescente de 1,5mm d'épaisseur est produite avec différentes structures. Une première est constituée à partir d'une seule couche de la composition naturelle indiquée précédemment (1C). Une deuxième structure correspond à la superposition de trois couches partielles (3C) selon l'assemblage décrit à propos de la figure 3, à savoir une couche naturelle, une couche synthétique et une couche naturelle, chacune après séchage présentant une épaisseur d'à peu près 0,5mm. La troisième structure comprend un ensemble de cinq couches partielles (5C) chacune d'environ 0,3mm, les trois couches naturelles et les deux couches synthétiques alternant comme précédemment.

Les couches intumescentes préparées sont assemblées dans des vitrages comprenant deux feuilles de verre de chacune de 3mm d'épaisseur. Les échantillons sont soumis à un test de vieillissement thermique, dans les conditions qui reproduisent un vieillissement naturel de 10 ans. L'échantillon est exposé à une température de 80°C pendant 21 jours.

Le graphique de la figure 4 montre l'évolution de la diffusion en fonction du temps même au-delà des 21 jours.

Tous les échantillons à 21 jours présentent un voile qui reste dans les limites requises de moins de 3%. Le comportement néanmoins montre des différences significatives en particulier au-delà des 21 jours. Le premier échantillon montre un voile qui croît de façon significative alors que les échantillons selon l'invention ont une voile qui n'est jamais supérieur à 3%.

La formation des microparticules solides qui sont à l'origine de cette diffusion, peut être attribuée, au moins en partie, à des défauts d'homogénéité locale de la teneur en eau dans la couche de silicate. Le mode de séchage selon l'invention permet donc d'établir une homogénéité que le séchage en une seule couche ne favorise pas.

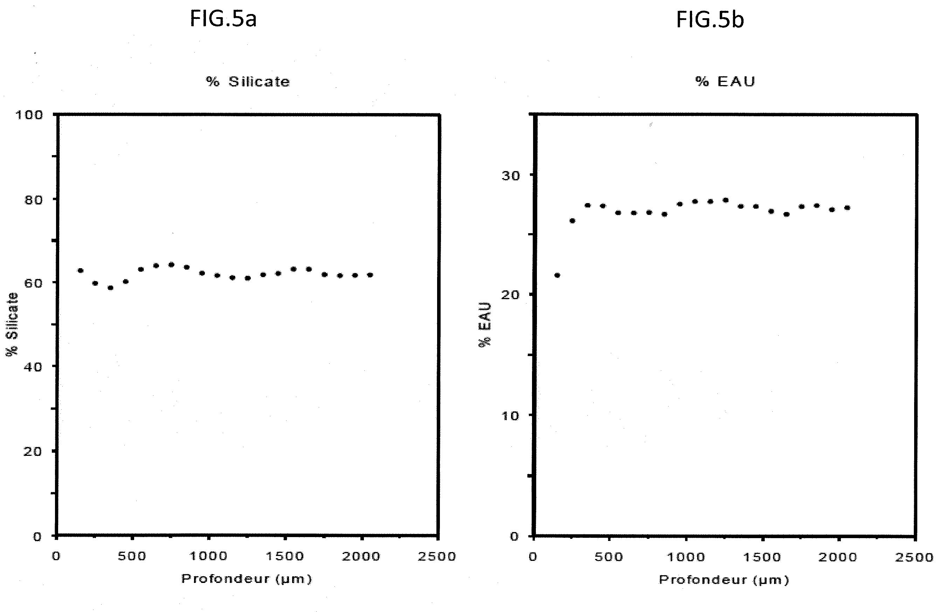

L'analyse illustrée aux figures 5a et 5b conforte cette conclusion. Dans cette analyse des échantillons à 5 couches décrits précédemment sont suivis par spectre Raman. L'absorption aux longueurs d'ondes choisies en fonction des constituants considérés. Pour l'eau la longueur d'onde est 3440 cm⁻¹, et 3500 cm⁻¹ pour la silice. Pour l'analyse un faisceau laser de longueur d'onde 514,532 nm et de 100mW est utilisé.

La mesure est faite dans l'épaisseur des couches intumescentes déposées sur une feuille de verre. La couche n'est pas recouverte d'une feuille de verre. La mesure est corrigée pour tenir compte de l'absorption du matériau en fonction de la profondeur.

Fonction des mesures effectuées, la dispersion des valeurs de la teneur en eau est appréciée à moins de 1% dans l'épaisseur exception du point mesuré à la surface qui est plus sec en raison de sa position particulière et du fait que la couche n'est pas protégée de l'atmosphère environnante par une feuille de verre.

Les propriétés de résistance à l'épreuve au feu sont aussi déterminées par comparaison de vitrages monocouches traditionnels, avec des vitrages selon l'invention dont la couche intumescente est constituée de trois couches partielles comme décrit plus haut.

Les épreuves au feu sont conduites sur des vitrages dont les deux feuilles de verre ont chacune une épaisseur de 3mm et le matériau intumescent 1,5mm. Les dimensions du vitrage sont 120x120cm.

Les conditions de l'épreuve suivent le protocole de la norme EN1363

Les deux échantillons disposés côte à côte sont traités simultanément pour comparer leur qualité dans des conditions rigoureusement identiques. La mesure est faite sur l'étanchéité et l'isolation (EI) et la limitation des radiations (EW). Cette dernière doit rester inférieure à kW/m² à une distance de 1m du vitrage. La mesure détermine le temps pendant lequel le vitrage conserve l'étanchéité aux flammes et la température du verre non directement exposé aux flammes demeure inférieure à 140° en plus de la température ambiante.

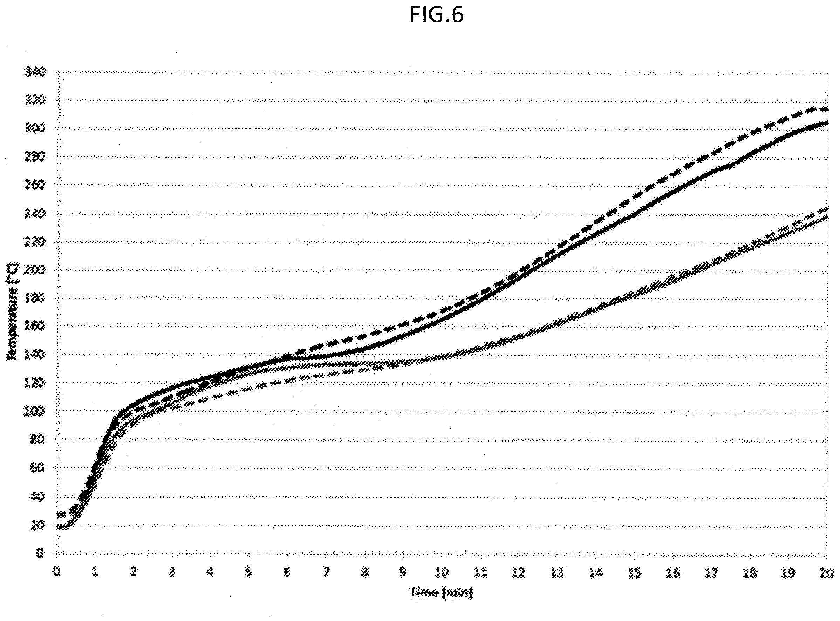

L'échantillon traditionnel cède avant celui selon l'invention. Le temps de résistance est de 9,4mn pour l'échantillon traditionnel et de 12,6mn pour celui selon l'invention. La figure 6 reproduit les mesures de température en fonction du temps d'exposition pour deux essais. Les mesures pour le produit traditionnel sont marqués I et pour le produit selon l'invention II.

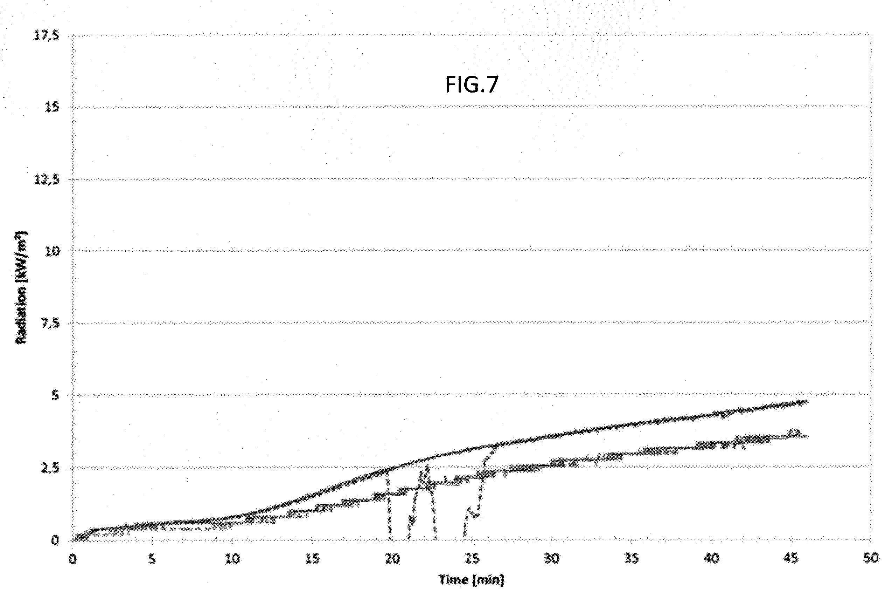

La mesure de la résistance au feu est aussi celle de la transmission énergétique au cours de l'essai (EW). La figure 7 reproduit cette mesure également déterminante pour la qualité du vitrage. Cette mesure montre que les deux types d'échantillons présentent, selon la norme, une valeur EW supérieure à 45mn, mais la performance des échantillons selon l'invention est aussi accrue d'environ 25%.

La formation de multicouches partielles avec d'autant plus d'interfaces que ces couches sont plus nombreuses, permet une amélioration des qualités de résistance au feu. La différence positive constatée en faveur des produits selon l'invention résulte en partie de la présence de couches partielles à rapport molaire plus élevé, et dont on sait qu'ils leur correspondent des produits plus réfractaires.

Un essai au feu est également effectué avec un vitrage comportant trois feuilles de verre (1, 2, 5) et deux couches intumescentes (3, 4) comme illustré schématiquement à la figure 8. Les feuilles de verre ont respectivement 3, 8 et 3mm d'épaisseur et pour dimension 120x120cm.

Les couches intumescentes sont de 1,5mm d'épaisseur. Les couches comparées sont identiques à celles décrites pour le précédent essai au feu. Il s'agit donc soit d'une couche unique pour le mode traditionnel antérieur, soit selon l'invention pour chaque couche finale la superposition de trois couches partielles.

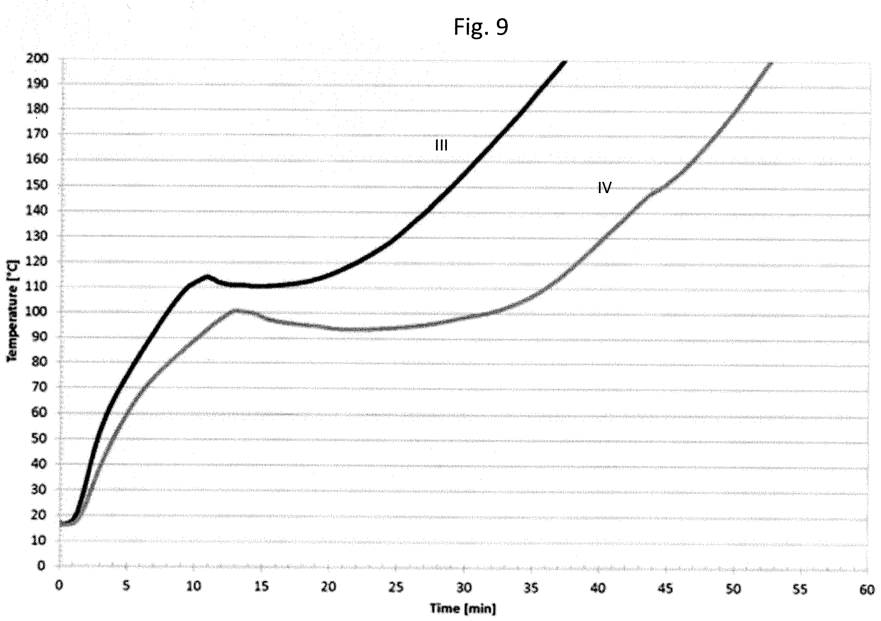

L'essai au feu est réalisé comme précédemment. On mesure la température sur la face de la feuille de verre qui n'est pas directement exposée au feu. La figure 9 montre l'évolution de la température en fonction du temps pour les échantillons testés au cours d'un même essai.

Le résultat de cet essai montre que la température de 140°C supérieure à la température ambiante est atteinte pour le vitrage traditionnel indiqué en III après environ 30mn quand pour le vitrage selon l'invention, IV, cette température n'est atteinte qu'après environ 47mn, soit un gain de près de 50%.

En conclusion les vitrages constitués utilisant des couches intumescentes préparées selon les modalités de l'invention permettent de réduire les temps de séchage d'une part, et, d'autre part conduisent à des produits plus homogènes offrant des améliorations des propriétés notamment au vieillissement et à l'épreuve du feu.

## Revendications

1. Procédé de production de vitrage résistant au feu et comprenant au moins deux feuilles de verre entre lesquelles est disposé un matériau intumescent à base de silicate alcalin hydraté, dans lequel plusieurs nappes de solutions de silicate alcalins sont appliquées successivement,
la première nappe étant directement sur une des feuilles de verre, cette nappe étant séchée,
au moins une seconde nappe étant appliquée sur la première, cette seconde nappe étant également séchée,
le processus étant répété autant de fois que nécessaire pour atteindre l'épaisseur finale recherchée,
la composition des nappes successives étant choisie de sorte à limiter la diffusion de l'eau d'une nappe à celle précédemment séchée,
le rapport molaire SiO₂/M₂O (M étant soit Na soit K) des compositions de silicate étant compris entre 3,2 et 5,5,
les solutions de silicate alcalin de deux nappes successives soumises à séchage, présentent une différence de rapport molaire SiO₂/M₂O (M étant soit Na soit K) ΔRm d'au moins 0,5.

2. Procédé selon la revendication 1 dans lequel la différence de rapport molaire entre les compositions de deux nappes successives est d'au moins 0,8.

3. Procédé selon l'une des revendications précédentes dans lequel deux solutions de silicate alcalin successives soumises à séchage les solutions sont alternativement des solutions de silicate de sodium et de silicate de potassium.

4. Procédé selon l'une des revendications 1 à 3 dans lequel dans la succession des solutions soumises à séchage, une sur deux est une solution dans laquelle une part de la silice contenue qui n'est pas inférieure 10% et de préférence pas inférieure à 15% provient de silice colloïdale introduite dans la composition de la solution.

5. Procédé selon l'une des revendications précédentes dans lequel la quantité de composition appliquée pour chaque nappe est telle que chaque couche partielle formée après séchage, présente une épaisseur qui n'est pas supérieure à 2mm et de préférence pas supérieure à 1,5mm et de façon particulièrement préférée pas supérieure à 1mm.

6. Procédé selon la revendication 5 dans lequel chaque couche partielle formée, après séchage présente une épaisseur qui n'est pas inférieure à 0,25mm.

7. Procédé selon l'une des revendications précédentes dans lequel le matériau intumescent comprenant les différentes couches partielles superposées présente une teneur en eau globale qui n'est pas supérieure à 33% en poids, et de préférence pas supérieure à 28% en poids du matériau séché.

8. Procédé selon la revendication 7 dans lequel le matériau intumescent comprenant les différentes couches partielles superposées présente une teneur en eau globale qui est supérieure à 18% en poids, et de préférence supérieure à 21% en poids du matériau séché.

9. Procédé selon l'une des revendications précédentes dans lequel les compositions des solutions de silicates alcalins appliquées successivement, avant séchage présentent une teneur en eau qui n'est pas inférieure à 35%.

10. Procédé selon l'une des revendications précédentes dans lequel les compositions des solutions de silicates alcalins appliquées successivement comportent avant séchage de la glycérine ou de l'éthylène glycol à des teneurs au moins égales à 5% en poids de la solution et de préférence au moins 6% en poids.

11. Procédé selon la revendication 10 dans laquelle la teneur en glycérine ou éthylène glycol n'est pas supérieure à 18% en poids, et de préférence pas supérieure à 15% en poids.

12. Procédé selon l'une des revendications précédentes dans lequel l'épaisseur totale du matériau intumescent n'est pas inférieure à 1,5mm et de préférence pas inférieure à 2mm.

13. Vitrage anti-feu comprenant au moins un matériau intumescent à base de silicate alcalin hydraté obtenu par un procédé selon l'une des revendications 1 à 12.

14. Vitrage selon la revendication 13 dans lequel les variations de teneur en eau dans l'épaisseur du matériau séché n'excèdent pas 2% et de préférence n'excèdent pas 1%.

## Patentansprüche

1. Verfahren zur Herstellung einer feuerfesten Verglasung, die mindestens zwei Glasscheiben umfasst, zwischen die ein intumeszierendes Material auf der Basis von hydratisiertem Alkalisilikat eingebracht wird, wobei mehrere Schichten von Alkalisilikatlösungen nacheinander aufgebracht werden,
wobei sich die erste Schicht direkt auf einer der Glasscheiben befindet, wobei diese Schicht getrocknet wird,
wobei mindestens eine zweite Schicht auf die erste aufgebracht wird, wobei diese zweite Schicht ebenfalls getrocknet wird,
wobei der Vorgang so oft wie nötig wiederholt wird, um die angestrebte endgültige Dicke zu erreichen,
wobei die Zusammensetzung der aufeinanderfolgenden Schichten so gewählt wird, dass die Wasserdiffusion von einer Schicht zu der zuvor getrockneten eingeschränkt wird,
wobei das Molverhältnis SiO₂/M₂O (wobei M entweder Na oder K ist) der Silikatzusammensetzungen zwischen 3,2 und 5,5 beträgt,
wobei die Alkalisilikatlösungen zweier aufeinanderfolgender Schichten, die einer Trocknung unterzogen werden, einen Unterschied im Molverhältnis SiO₂/M₂O (wobei M entweder Na oder K ist) ΔRm von mindestens 0,5 aufweisen.

2. Verfahren nach Anspruch 1, bei dem der Unterschied im Molverhältnis zwischen den Zusammensetzungen zweier aufeinanderfolgender Schichten mindestens 0,8 beträgt.

3. Verfahren nach einem der vorhergehenden Ansprüche, wobei zwei aufeinanderfolgende Alkalisilikatlösungen, die einer Trocknung unterzogen werden, abwechselnd Natriumsilikat- und Kaliumsilikatlösungen sind.

4. Verfahren nach einem der Ansprüche 1-3, wobei es sich bei der Reihenfolge der einer Trocknung unterzogenen Lösungen bei einer von zwei um eine Lösung handelt, in der ein Teil des enthaltenen Siliziumdioxids, der nicht kleiner als 10% und vorzugsweise nicht kleiner als 15% ist, aus kolloidalem Siliziumdioxid stammt, das in die Zusammensetzung der Lösung eingebracht wird.

5. Verfahren nach einem der vorhergehenden Ansprüche, wobei die Menge an Zusammensetzung, die für jede Schicht aufgebracht wird, derart ist, dass jede nach dem Trocknen gebildete Teilschicht eine Dicke von nicht mehr als 2 mm und vorzugsweise nicht mehr als 1,5 mm und ganz besonders bevorzugt nicht mehr als 1 mm aufweist.

6. Verfahren nach Anspruch 5, wobei jede gebildete Teilschicht nach dem Trocknen eine Dicke aufweist, die nicht weniger als 0,25 mm beträgt.

7. Verfahren nach einem der vorhergehenden Ansprüche, wobei das intumeszierende Material, das die verschiedenen übereinandergelagerten Teilschichten umfasst, einen Gesamt-Wassergehalt von nicht mehr als 33 Gew.-% und vorzugsweise nicht mehr als 28 Gew.-%, bezogen auf das Gewicht des getrockneten Materials, aufweist.

8. Verfahren nach Anspruch 7, wobei das intumeszierende Material, das die verschiedenen übereinandergelagerten Teilschichten umfasst, einen Gesamt-Wassergehalt aufweist, der mehr als 18 Gew.-% und vorzugsweise mehr als 21 Gew.-%, bezogen auf das Gewicht des getrockneten Materials, beträgt.

9. Verfahren nach einem der vorhergehenden Ansprüche, wobei die Zusammensetzungen der nacheinander aufgebrachten Alkalisilikatlösungen vor dem Trocknen einen Wassergehalt von nicht weniger als 35% aufweisen.

10. Verfahren nach einem der vorhergehenden Ansprüche, wobei die Zusammensetzungen der nacheinander aufgebrachten Alkalisilikatlösungen vor dem Trocknen Glycerin oder Ethylenglykol in Gehalten von mindestens gleich 5 Gew.-%, bezogen auf das Gewicht der Lösung, und vorzugsweise von mindestens 6 Gew.-% enthalten.

11. Verfahren nach Anspruch 10, wobei der Gehalt an Glycerin oder Ethylenglykol nicht höher als 18 Gew.-% und vorzugsweise nicht höher als 15 Gew.-% ist.

12. Verfahren nach einem der vorhergehenden Ansprüche, wobei die Gesamtdicke des intumeszierenden Materials nicht kleiner als 1,5 mm und vorzugsweise nicht kleiner als 2 mm ist.

13. Feuerbeständige Verglasung, umfassend mindestens ein intumeszierendes Material auf der Basis von hydratisiertem Alkalisilikat, die durch ein Verfahren nach einem der Ansprüche 1 bis 12 erhalten wird.

14. Verglasung nach Anspruch 13, wobei die Schwankungen im Wassergehalt in der Dicke des getrockneten Materials 2% nicht überschreiten und vorzugsweise 1% nicht überschreiten.

## Claims

1. Process for the production of a fire-resistant glazing comprising at least two glass sheets, between which is positioned an intumescent material based on hydrated alkali metal silicate, in which several coats of solutions of alkali metal silicate are successively applied,
the first coat being directly on one of the glass sheets, this coat being dried,
at least one second coat being applied to the first, this second coat also being dried,
the process being repeated as many times as necessary in order to achieve the final thickness desired,
the composition of the successive coats being chosen so as to limit the diffusion of water from one coat to that dried previously,
the SiO₂/M₂O (M being either Na or K) molar ratio of the silicate compositions being between 3.2 and 5.5, the solutions of alkali metal silicate of two successive coats subjected to drying exhibiting a difference in SiO₂/M₂O (N being either Na or K) molar ratio ΔmR of at least 0.5.

2. Process according to Claim 1, in which the difference in molar ratio between the compositions of two successive coats is at least 0.8.

3. Process according to either of the preceding claims, in which two successive solutions of alkali metal silicate subjected to drying are alternatively solutions of sodium silicate and of potassium silicate.

4. Process according to one of Claims 1 to 3, in which, in the sequence of the solutions subjected to drying, one in two is a solution in which a part of the silica present which is not less than 10% and preferably not less than 15% originates from colloidal silica introduced into the composition of the solution.

5. Process according to one of the preceding claims, in which the amount of composition applied for each coat is such that each partial layer formed exhibits, after drying, a thickness which is not greater than 2 mm and preferably not greater than 1.5 mm and particularly preferably not greater than 1 mm.

6. Process according to Claim 5, in which each partial layer formed exhibits, after drying, a thickness which is not less than 0.25 mm.

7. Process according to one of the preceding claims, in which the intumescent material comprising the different superposed partial layers exhibits an overall water content which is not greater than 33% by weight and preferably not greater than 28% by weight of the dried material.

8. Process according to Claim 7, in which the intumescent material comprising the different superposed partial layers exhibits an overall water content which is greater than 18% by weight and preferably greater than 21% by weight of the dried material.

9. Process according to one of the preceding claims, in which the compositions of the solutions of alkali metal silicates successively applied exhibit, before drying, a water content which is not less than 35%.

10. Process according to one of the preceding claims, in which the compositions of the solutions of alkali metal silicates successively applied comprise, before drying, glycerol or ethylene glycol at contents of at least equal to 5% by weight of the solution and preferably at least 6% by weight.

11. Process according to Claim 10 in which the content of glycerol or ethylene glycol is not greater than 18% by weight and preferably not greater than 15% by weight.

12. Process according to one of the preceding claims, in which the total thickness of the intumescent material is not less than 1.5 mm and preferably not less than 2 mm.

13. Fire-resistant glazing comprising at least one intumescent material based on hydrated alkali metal silicate obtained by a process according to one of Claims 1 to 12.

14. Glazing according to Claim 13, in which the variations in the water content in the thickness of the dried material do not exceed 2% and preferably do not exceed 1%.
